# FASCICULE DE BREVET EUROPEEN

(11) **EP 1 210 252 B1**
(45) Date de publication et mention de la délivrance du brevet: **11.05.2005**
(21) Numéro de dépôt: 00962584.9
(22) Date de dépôt: 08.09.2000
(51) Int. Cl.: B60R 21/20

(54) **DISPOSITIF D'AIDE AU DEPLOIEMENT D'UN COUSSIN GONFLABLE DE VEHICULE AUTOMOBILE**
HILFSVORRICHTUNG ZUM ÖFFNEN EINES KRAFTFAHRZEUGGASKISSENS
ASSISTING DEVICE FOR UNFOLDING A MOTOR VEHICLE INFLATABLE AIRBAG

(30) Priorité: 10.09.1999 FR 9911342
(43) Date de publication de la demande: 05.06.2002
(73) Titulaire: Renault s.a.s., 92100 Boulogne Billancourt (FR); EUROSTYLE (S.A.), F-91370 Verrières le Buisson (FR)
(72) Inventeur: PONCEAU, Philippe, F-78610 Le Perray en Yvelines (FR); GUYOT, Robert, F-36000 Châteauroux (FR)
(74) Mandataire: Srour, Elie
(86) Numéro de dépôt international: PCT/FR2000/002483
(87) Numéro de publication internationale: WO 2001/019650

(56) Documents cités:
- EP-A- 0 904 992
- DE-A- 19 826 511
- DE-U- 29 803 985
- FR-A- 1 584 875
- FR-A- 2 781 738
- GB-A- 2 296 476

## Description

L'invention concerne un dispositif d'aide au déploiement d'un coussin gonflable de véhicule automobile et plus particulièrement d'un coussin gonflable localisé à la jonction de deux éléments d'habillage.

Afin de protéger les passagers lors d'une collision latérale, il est utilisé des coussins gonflables appelés communément air-bag. Ces coussins gonflables se gonflent lors d'un choc d'intensité importante, entre le passager et le côté de l'habitacle d'un véhicule automobile

Tel que décrit dans la publication EP-A-0791511 une solution d'intégration du coussin gonflable en vue de son déploiement est de le fixer sous l'habillage de pavillon et plus particulièrement à la limite dudit habillage. Le coussin gonflable se place alors entre la vitre latérale et la tête du passager à protéger lors de son déploiement, en déformant la bordure de l'habillage de pavillon afin de permettre le passage dudit coussin gonflable.

Un tel déploiement peut être rendu difficile lorsque le coussin gonflable forme un rideau de protection couvrant les parties latérales intérieures du véhicule. Le coussin gonflable sous forme de rideau se déploie non seulement au niveau des parties vitrées mais également au niveau des habillages de pied milieu et de custode qui forment une jonction avec l'habillage de pavillon. Les jonctions des habillages créent alors un obstacle pouvant perturber le déploiement du coussin gonflable.

Le temps de déploiement du coussin gonflable devant être le plus court possible, tout obstacle pouvant augmenter ce temps peut avoir des conséquences importantes sur l'efficacité du dispositif de protection.

La publication EP-A-0904992 décrit une solution intégrant un coussin gonflable à la jonction de deux éléments d'habillage, d'accord avec le préambule de la revendication 1.

Afin de pallier ces inconvénients l'invention a pour objet, un dispositif assurant un guidage du coussin gonflable lors de son déploiement.

L'invention a également pour objet, un dispositif de guidage d'un coût très faible et intégré aux habillages ou à d'autres parties du véhicule automobile.

Selon une caractéristique de l'invention, comporte une surface de guidage, orientée d'une zone de sortie dudit coussin gonflable vers une partie d'extrémité, d'aboutissement de ladite surface de guidage, dudit second élément d'habillage, localisée à la limite extérieure de la zone de coopération entre les premier et second éléments d'habillage.

Selon une autre caractéristique de l'invention, la surface de guidage est une partie d'un des éléments d'habillage.

Selon une autre caractéristique de l'invention, la jonction de la surface de guidage avec l'élément d'habillage forme un rebord de maintien, en position fermée, des premier et second éléments d'habillage l'un par rapport à l'autre.

Selon une autre caractéristique de l'invention, la surface de guidage est un élément du support du coussin gonflable.

Selon une autre caractéristique de l'invention, la surface de guidage est une partie d'un élément de carrosserie.

Selon une autre caractéristique de l'invention, la surface de guidage porte un élément de fixation du premier élément d'habillage.

D'autres caractéristiques et avantages de l'invention apparaîtront à la lecture de la description d'exemples de réalisation d'un dispositif d'aide au déploiement d'un coussin gonflable en référence aux dessins annexés dans lesquels :
- La figure 1 représente une section d'une partie latérale du véhicule comportant le dispositif d'aide au déploiement d'un coussin gonflable selon l'invention.
- La figure 2 représente un autre mode de réalisation de l'invention.

Dans la description qui suit, l'exemple de réalisation concernera un seul côté de l'habitacle. Il va de soit que cet exemple de réalisation peut être utilisé sur les deux côtés de l'habitacle du véhicule automobile. De plus l'exemple de réalisation concernera une application à des habillages de custode et de pied milieu, mais pourra être facilement adapté à tout autre type d'habillage. L'invention peut être également utilisée pour tout coussin gonflable, autre que du type rideau, dont le déploiement peut être amélioré par l'utilisation du dispositif selon l'invention.

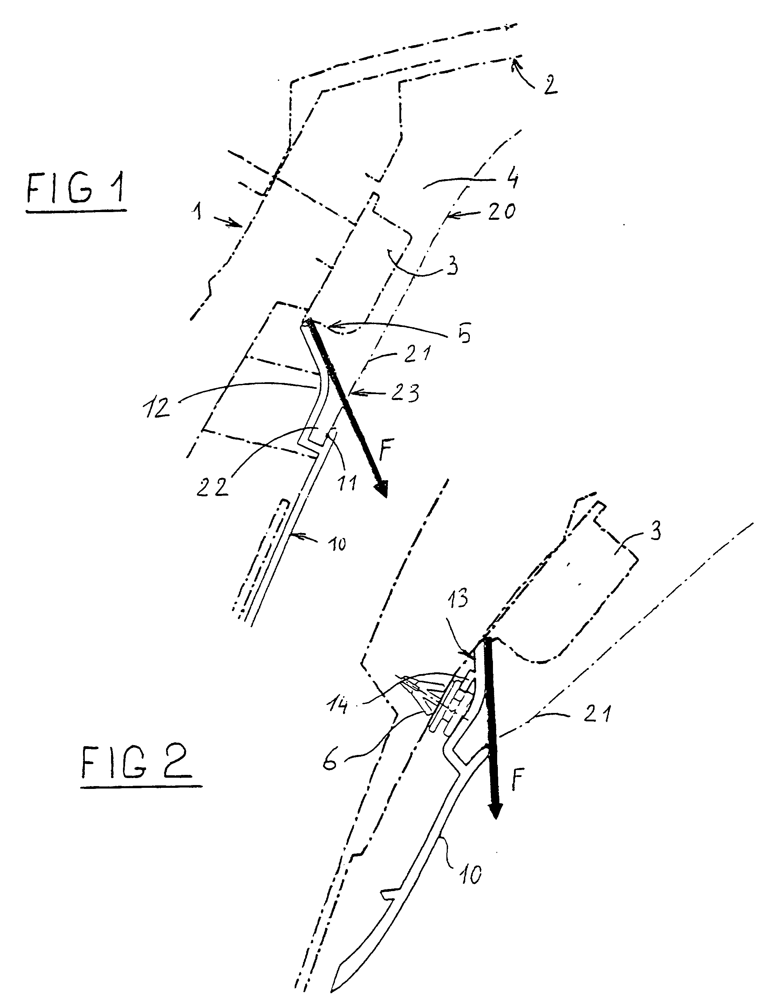

Tel que représenté à la figure 1, le véhicule automobile comporte des éléments de carrosserie, et en particulier un côté d'habitacle 1 et un pavillon 2. Ces éléments de carrosserie comportent des habillages intérieurs, destinés entre autre à assurer une certaine isolation phonique et surtout à donner un aspect esthétique.

Le côté d'habitacle comporte en particulier dans sa partie arrière un habillage de custode et dans sa partie milieu, à la jonction de la porte avant et de la porte arrière, un habillage de pied milieu.

Le pavillon comporte un habillage qui s'étend sur l'ensemble de sa surface et qui rejoint par ces limites latérales, les habillages de custode et de pied milieu.

Dans notre exemple de réalisation, l'habillage de pavillon recouvre un dispositif de coussin gonflable 3 qui s'étend de l'avant vers l'arrière du véhicule, au-dessus des portes latérales. Le coussin gonflable 3 est localisé, dans son état non déployé, sensiblement au niveau de la jonction de l'habillage de pavillon et des habillages de pied milieu et de custode. L'habillage de pavillon comporte une extrémité mobile 21, sous la pression exercée par le déploiement du coussin gonflable 3, permettant à ce dernier de sortir de la partie arrière 4 de l'habillage et de s'intercaler entre le passager et la partie latérale du véhicule automobile. Les habillages de custode et de pied milieu, dans notre exemple de réalisation. sont fixes.

Afin de faciliter la compréhension de la description des exemples de réalisation, les éléments d'habillage fixes, tels que les habillages de custode et de pied milieu, seront désignés comme premier élément d'habillage 10 et l'habillage comportant une partie mobile 21, tel que l'habillage de pavillon, sera désigné comme second élément d'habillage 20. Il va de soit que les premiers et second éléments d'habillage 10 et 20 peuvent chacun être constitués de plusieurs éléments.

Le premier élément d'habillage 10 comporte. au niveau de la jonction avec le second élément d'habillage 20, un rebord de maintien 11 de la bordure 22 dudit second élément d'habillage 20. Le premier élément d'habillage 10 comporte également, à proximité du rebord 11, une surface de guidage 12, du déploiement du coussin gonflable 3, de forme inclinée en direction de la jonction desdits premier et second éléments d'habillage 10 et 20. La surface de guidage 12 peut venir de moulage avec le premier élément d'habillage 10. Le rebord de maintien 11 est alors formé en partie par la jonction de la surface de guidage 12 avec le premier élément d'habillage 10.

L'inclinaison de la surface de guidage 12 est orientée de la zone de sortie 5 dudit coussin gonflable 3 vers une partie d'extrémité 23, dudit second élément d'habillage 20, localisée à la limite extérieure de la zone de coopération entre les premier et second éléments d'habillage 10 et 20, de manière à diriger le coussin gonflable 3, lors de son déploiement, vers l'extrémité mobile 21 du second élément d'habillage 20. La limite extérieure correspond sensiblement, sur les figures 1 et 2, à l'intersection de la flèche F avec la partie mobile 21.

De plus, tel que représenté à la figure 2, et afin de faciliter la fixation du premier élément d'habillage 10 et d'améliorer sa tenue lors du déploiement du coussin gonflable 3, la partie supérieure 13 de la surface de guidage 12 peut comporter des pattes de fixation 14, ou une agrafe moulée directement avec l'élément d'habillage, qui coopèrent avec des orifices réalisés dans les éléments de carrosserie ou avec des agrafes 6 positionnées sur ladite carrosserie. La fixation de l'habillage 10 s'effectue alors par introduction des pattes 14, ou de l'agrafe, dans les orifices permettant ainsi d'obtenir un meilleur maintien, notamment dans la partie supérieure dudit habillage 10.

Lors du déploiement du coussin gonflable 3, ce dernier s'appuie sur la surface de guidage 12 qui dirige l'évolution dudit coussin gonflable 3 vers la jonction des premier et second éléments d'habillage 10 et 20, suivant la direction et le sens indiqué par la flèche F. La pression exercée sur la partie mobile 21 du second élément d'habillage 20, par le coussin gonflable 3, produit une flexion de ladite partie mobile 21 lui permettant d'échapper au rebord de maintien 11. Le coussin gonflable 3 se déploie alors le long du côté du véhicule automobile.

Dans un autre exemple de réalisation, non représenté, la surface de guidage 12 est un élément du support du coussin gonflable 3, tel que par exemple une partie de l'enveloppe rigide du coussin gonflable 3 ou une partie externe faisant office de support.

Dans un autre exemple de réalisation, non représenté, la surface de guidage 12 est un élément de carrosserie, tel que par exemple un embouti réalisé sur une pièce de tôlerie.

Dans un autre exemple de réalisation, non représenté, la surface de guidage 12 est un élément réalisé indépendamment de l'habillage ou de carrosserie.

Dans ces trois derniers modes de réalisation la surface de guidage 12 peut se prolonger en une pane de fixation d'un élément d'habillage en coopérant, par exemple, avec un orifice réalisé dans ledit élément d'habillage.

Les éléments d'habillage peuvent être, au moins pour le premier élément d'habillage 10, un élément en tôle de la carrosserie.

## Revendications

1. Dispositif d'aide au déploiement d'un coussin gonflable (3), localisé à la jonction d'au moins deux éléments distincts de l'habillage de parties de la carrosserie d'un véhicule automobile, dont le premier (10) desdits éléments d'habillages est fixe et le second (20) est destiné à se déformer sous la pression exercée par ledit coussin gonflable (3) lors de son déploiement, et qui comporte une surface de guidage (12), formée par une partie d'un des éléments d'habillage (10, 20) orientée d'une zone de sortie (5) dudit coussin gonflable (3) vers une partie d'extrémité (23), dudit second élément d'habillage (20), d'aboutissement de la surface de guidage, localisée à la limite extérieure d'une zone de coopération entre les premier (10) et second (20) éléments d'habillage, **caractérisé en ce que** la surface de guidage (12) porte un élément de fixation du premier élément d'habillage (10).

2. Dispositif d'aide au déploiement selon la revendication 1, **caractérisé en ce que** la jonction de la surface de guidage (12) avec l'élément d'habillage forme un rebord de maintien (11), en position fermée, des premier (10) et second (20) éléments d'habillage l'un par rapport à l'autre.

## Patentansprüche

1. Vorrichtung zur Hilfe beim Entfalten eines aufblasbaren Kissens (3), das sich an der Nahtstelle von mindestens zwei verschiedenen Elementen der Verkleidung von Teilen der Karosserie eines Kraftfahrzeugs befindet, wobei das erste (10) der Elemente der Verkleidung fest ist und das zweite (20) dazu bestimmt ist, sich unter dem Druck zu verformen, der durch das aufblasbare Kissen (3) bei seinem Entfalten ausgeübt wird, und die eine Führungsoberfläche (12) aufweist, die von einem Teil eines der Elemente der Verkleidung (10, 20) gebildet wird, das von einem Austrittsbereich (5) des aufblasbaren Kissens (3) hin zu einem Endteil (23) des zweiten Elements der Verkleidung (20), des Endes der Führungsoberfläche, ausgerichtet ist, das an der äußeren Grenze eines Bereichs des Zusammenwirkens zwischen dem ersten (10) und zweiten (20) Element der Verkleidung angeordnet ist,
**dadurch gekennzeichnet, dass** die Führungsoberfläche (12) ein Element der Befestigung des ersten Elements der Verkleidung (10) trägt.

2. Vorrichtung zur Hilfe beim Entfalten gemäß Anspruch 1, **dadurch gekennzeichnet, dass** die Nahtstelle zwischen der Führungsoberfläche (12) und dem Element der Verkleidung eine Kante zum Halten (11) bildet, in geschlossener Position, des ersten (10) und zweiten (20) Elements der Verkleidung, eines gegenüber dem anderen.

## Claims

1. A device assisting with the deployment of an airbag (3), disposed at the junction of at least two separate members of the covering of parts of the bodywork of an automobile vehicle, the first (10) of these covering members being fixed and the second (20) being adapted to be deformed under the pressure exerted by the airbag (3) during its deployment, and which comprises a guide surface (12) formed by a part of one of the covering members (10, 20) oriented from an outlet zone (5) of the airbag (3) towards an end portion (23), of the second covering member (20), completing the guide surface, located at the outer limit of a cooperation zone between the first and the second covering members (10, 20), **characterised in that** the guide surface (12) comprises a member for fastening the first covering member (10).

2. A deployment assistance device as claimed in claim 1, **characterised in that** the junction of the guide surface (12) with the covering member forms a rim (11), in the closed position, retaining the first and second covering members (10, 20) with respect to one another.
